# EUROPEAN PATENT APPLICATION

(11) **EP 4 822 059 A1**
(43) Date of publication of application: **14.10.2026**
(21) Application number: 24918541.4
(22) Date of filing: 23.12.2024
(51) Int. Cl.: C25B 9/00, C01B 3/02, C25B 1/042

(54) **HYDROGEN PRODUCTION PLANT AND HYDROGEN PRODUCTION METHOD**

(30) Priority: 18.01.2024 JP 2024006124
(71) Applicant: MITSUBISHI HEAVY INDUSTRIES, LTD., Chiyoda-ku Tokyo 100-8332 (JP)
(72) Inventor: TOBO, Makoto, Tokyo 100-8332 (JP); CHOI, Eunsoo, Tokyo 100-8332 (JP); KATO, Masayuki, Tokyo 100-8332 (JP); TERASHIMA, Koji, Tokyo 100-8332 (JP)
(74) Representative: Müller Schupfner & Partner Patent- und Rechtsanwaltspartnerschaft mbB (Muc)
(86) International application number: PCT/JP2024/045380
(87) International publication number: WO 2025/154484

(57) **Abstract**

The purpose of the present invention is to improve the safety of a hydrogen production plant. This hydrogen production plant (1) comprises: a solid oxide electrolysis cell (SOEC) (10) which produces a hydrogen-containing gas; and a discharge stack (30) into which the hydrogen-containing gas produced by the SOEC (10) is introduced and which discharges the introduced hydrogen-containing gas to air. The discharge stack (30) has a spray unit (32) which supplies, to the hydrogen-containing gas introduced therein, cooling water for cooling the hydrogen-containing gas.

## Description

### [Technical Field]

The present disclosure relates to a hydrogen production plant and a hydrogen production method.

### [Background Art]

In the recent trend toward carbon neutrality, hydrogen has been used in various applications. Thus, facilities for producing hydrogen are known (for example, Patent Literature 1).

Patent Literature 1 discloses a dehumidifying device including a mixture gas generation unit configured to generate a mixture gas of an oxyhydrogen gas and a liquified petroleum gas and a dehumidifying unit configured to reduce the humidify of the mixture gas generated by said mixture gas generation unit. The mixture gas generation unit disclosed in Patent Literature 1 includes an electrolytic cell configured to generate an oxyhydrogen gas by electrolysis or the like. Further, the dehumidifying unit includes a gas-liquid contact cell configured to remove moisture contained in the mixture gas by gas-liquid contact and a cooler configured to cool a liquid to be in contact with the mixture gas in said gas-liquid contact cell.

### [Citation List]

### [Patent Literature]

[PTL 1]
Japanese Patent Application Laid-Open No. 2014-223590

### [Summary of Invention]

### [Technical Problem]

In facilities for producing hydrogen, hydrogen may be emitted to the atmosphere during startup, emergency stop, or the like of these facilities. Thus, it is considered to provide, to a hydrogen production facility, an emission unit configured to emit hydrogen to the atmosphere. Since hydrogen may spontaneously ignite when the temperature thereof increases, it is also required to improve safety for the emission unit where hydrogen is emitted to the atmosphere.

However, the dehumidifying device disclosed in Patent Literature 1 does not include such an emission unit for emitting a generated hydrogen-containing gas to the atmosphere, and in Patent Literature 1, there is no consideration on safety of the device having the emission unit.

The present disclosure has been made in view of such circumstances and intends to provide a hydrogen production plant and a hydrogen production method that can improve safety.

### [Solution to Problem]

To solve the problem described above, the hydrogen production plant and the hydrogen production method of the present disclosure employ the following solutions.

A hydrogen production plant according to one aspect of the present disclosure includes: a production unit configured to produce a hydrogen-containing gas; and an emission unit configured to, once a hydrogen-containing gas produced by the production unit is introduced into the emission unit, emit the introduced hydrogen-containing gas to the atmosphere, and the emission unit has a cooling fluid supply unit configured to supply a cooling fluid for cooling the hydrogen-containing gas to the hydrogen-containing gas introduced into the emission unit.

Further, a hydrogen production method according to one aspect of the present disclosure includes: a production step of producing a hydrogen-containing gas; an introduction step of introducing a hydrogen-containing gas produced in the production step into an emission unit; a supply step of supplying a cooling fluid to the hydrogen-containing gas introduced into the emission unit; and an emission step of emitting the hydrogen-containing gas introduced into the emission unit to the atmosphere.

### [Advantageous Effects of Invention]

According to the present disclosure, it is possible to improve the safety of a hydrogen production plant.

### [Brief Description of Drawings]

[Fig. 1]

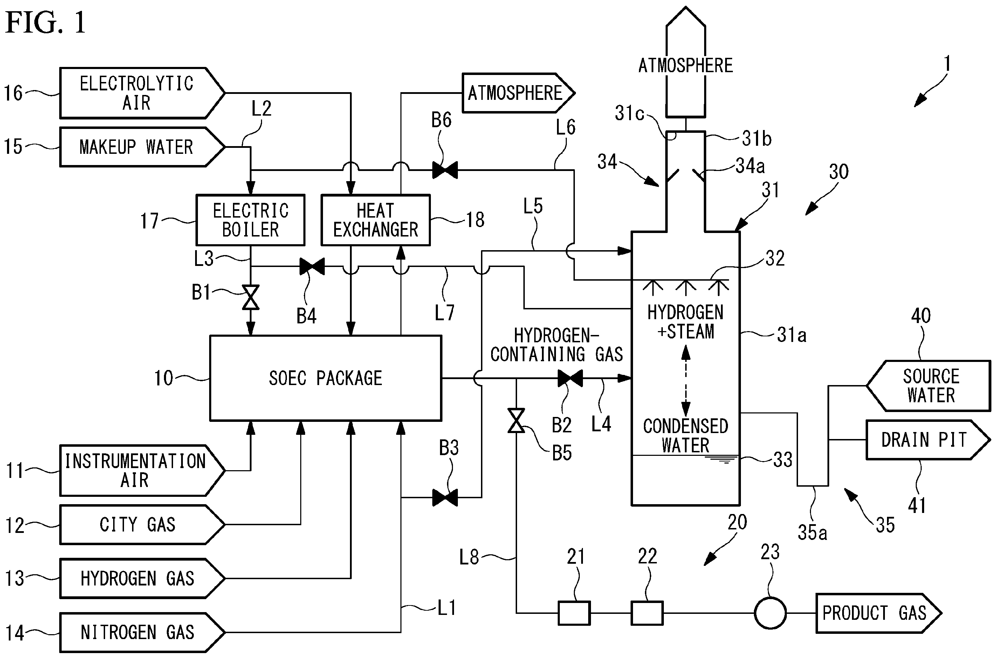

   Fig. 1 is a schematic configuration diagram illustrating a hydrogen production plant according to an embodiment of the present disclosure.
[Fig. 2]

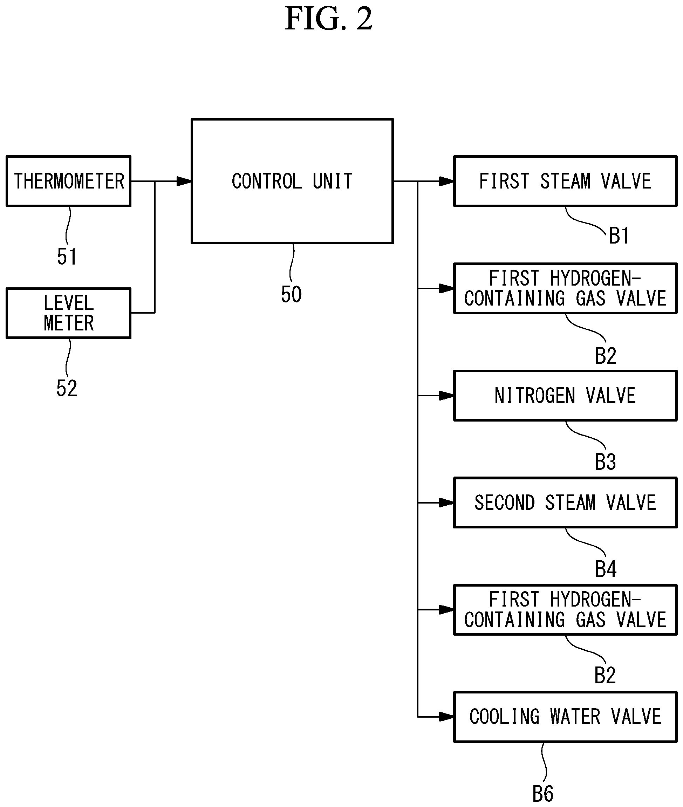

   Fig. 2 is a block diagram illustrating a control device according to the embodiment of the present disclosure.

### [Description of Embodiments]

One embodiment of a hydrogen production plant and a hydrogen production method according to the present disclosure will be described below with reference to the drawings.

A hydrogen production plant 1 according to the present embodiment is a plant that produces hydrogen during normal operation. Further, the hydrogen production plant 1 may emit a hydrogen-containing gas to the atmosphere during startup or emergency stop thereof.

As illustrated in Fig. 1, the hydrogen production plant 1 includes an SOEC device (hereafter, referred to as SOEC 10) configured to use a solid oxide electrolysis cell (SOEC) to produce a hydrogen-containing gas, an instrumentation air supply unit 11 configured to supply instrumentation air to the SOEC 10, a city gas supply unit 12 configured to supply a city gas to the SOEC 10, a hydrogen gas supply unit 13 configured to supply a hydrogen gas to the SOEC 10, a nitrogen gas supply unit 14 configured to supply a nitrogen gas to the SOEC, a makeup water supply unit 15 configured to supply makeup water to an electric boiler (steam generation unit) 17, an electrolytic air supply unit 16 configured to supply an electrolytic air (electrolytic gas) to the SOEC 10, the electric boiler 17 configured to heat the makeup water to generate steam to be supplied to the SOEC 10, and a heat exchanger 18 configured to perform heat exchange between the electrolytic air supplied to the SOEC 10 and the electrolytic air (discharged air) discharged from the SOEC 10.

The SOEC (production unit) 10 is supplied with an electrolytic gas (in the present embodiment, air as an example) at a high temperature and a high pressure and steam at a high temperature and a high pressure. The electrolytic gas and the steam supplied to the SOEC 10 are guided to an electrolytic chamber in which electrolysis cells are stored. The SOEC 10 electrolyzes steam by using solid electrolyte at a high temperature in the electrolytic chamber and thereby generates a hydrogen-containing gas (a mixture gas of hydrogen and steam) and oxygen. The generated hydrogen-containing gas is discharged outside via a hydrogen-containing gas pipe L4. Further, the generated oxygen is discharged outside together with discharged air.

The SOECs use, for example, ceramics such as yttria-stabilized zirconia as electrolyte, use high-temperature steam as feedstock, and thus can produce hydrogen at higher efficiency than other water electrolysis devices. It is also possible to perform co-electrolysis that uses carbon dioxide (CO₂) as feedstock and uses electrolyzed hydrogen as a reducing agent to produce carbon monoxide (CO).

The instrumentation air supply unit 11 supplies, to the SOEC 10, air (instrumentation air) such as that used for driving a control valve (not illustrated) provided to the SOEC 10.

The city gas supply unit 12 supplies, to the SOEC 10, a city gas used for heating the SOEC 10 when the SOEC 10 is started up.

The hydrogen gas supply unit 13 supplies, to the SOEC 10, a hydrogen gas used for filling the electrolysis cells with a reducing atmosphere when the SOEC 10 is started up.

The nitrogen gas supply unit 14 supplies, to the SOEC 10, a nitrogen gas used for purging oxygen or air remaining in the SOEC 10 when the SOEC 10 is started up.

Further, the hydrogen production plant 1 includes a nitrogen pipe (first nitrogen pipe) L1 connecting the nitrogen gas supply unit 14 to the SOEC 10, a makeup water pipe L2 connecting the makeup water supply unit 15 to the electric boiler 17, and a steam pipe (first steam pipe) L3 connecting the electric boiler 17 to the SOEC 10.

The nitrogen pipe L1 guides, to the SOEC 10, a nitrogen gas supplied from the nitrogen gas supply unit 14. The makeup water pipe L2 guides, to the electric boiler 17, makeup water supplied from the makeup water supply unit 15. The steam pipe L3 guides steam generated by the electric boiler 17 to the SOEC 10. A first steam valve B1 is provided to the steam pipe L3. The first steam valve B1 is, for example, an electromagnetic valve.

Further, the hydrogen production plant 1 includes a hydrogen generation unit 20 configured to generate a product gas (hydrogen) from a hydrogen-containing gas produced by the SOEC 10 and includes an emission stack (emission unit) 30 into which a hydrogen-containing gas produced by the SOEC 10 is introduced and that emits the introduced hydrogen-containing gas to the atmosphere.

Further, the hydrogen production plant 1 includes a hydrogen-containing gas pipe L4 connecting the SOEC 10 to the emission stack 30, a branched nitrogen pipe (second nitrogen pipe) L5 branched from the nitrogen pipe L1, a branched makeup water pipe L6 branched from the makeup water pipe L2, a branched steam pipe L7 branched from the steam pipe L3, and a branched hydrogen-containing gas pipe L8 branched from the hydrogen-containing gas pipe L4.

The hydrogen-containing gas pipe L4 guides a hydrogen-containing gas produced by the SOEC 10 to the emission stack 30. The branched nitrogen pipe L5 connects the nitrogen pipe L1 to the emission stack 30 and guides a part of the nitrogen gas, which flows through inside the nitrogen pipe L1, to the emission stack 30. The branched makeup water pipe L6 connects the makeup water pipe L2 to the emission stack 30 and guides a part of makeup water, which flows through the makeup water pipe L2, to the emission stack 30. The branched steam pipe (second steam pipe) L7 connects the steam pipe L3 to the emission stack 30 and guides a part or the whole of steam, which flows through the steam pipe L3, to the emission stack 30. The branched hydrogen-containing gas pipe L8 guides a part or the whole of the hydrogen-containing gas, which flows through the hydrogen-containing gas pipe L4, to the hydrogen generation unit 20.

A first hydrogen-containing gas valve B2 is provided to the hydrogen-containing gas pipe L4. Further, a nitrogen valve B3 is provided to the branched nitrogen pipe L5. Further, a second steam valve B4 is provided to the branched steam pipe L7. Further, a second hydrogen-containing gas valve B5 is provided to the branched hydrogen-containing gas pipe L8. The first hydrogen-containing gas valve B2, the nitrogen valve B3, the second steam valve B4, and the second hydrogen-containing gas valve B5 each are, for example, an electromagnetic valve.

Further, a cooling water valve (cooling fluid regulation unit) B6 is provided to the branched makeup water pipe L6. The cooling water valve B6 is, for example, a flow regulating valve. The cooling water valve B6 regulates the flow rate of cooling water supplied from a spray unit (cooling fluid supply unit) 32 described later.

The hydrogen generation unit 20 has a cooler 21 to which a hydrogen-containing gas is introduced via the branched hydrogen-containing gas pipe L8, a dehumidifier 22 to which a hydrogen-containing gas discharged from the cooler 21 is introduced, and a compressor 23 to which a hydrogen-containing gas discharged from the dehumidifier 22 is introduced.

The cooler 21 cools a hydrogen-containing gas to condense steam. Accordingly, the cooler 21 separates hydrogen and steam from each other.

Further, the dehumidifier 22 dehumidifies a hydrogen-containing gas cooled by the cooler 21.

Further, the compressor 23 increases the pressure of the hydrogen-containing gas dehumidified by the dehumidifier 22.

In such a way, the hydrogen generation unit 20 separates steam from a hydrogen-containing gas to generate a product gas (hydrogen).

The emission stack 30 has a casing 31 forming an outer shell, the spray unit (cooling fluid supply unit) 32 provided inside the casing 31, a storage part 33 provided to a lower part inside the casing 31, a seal part 34 provided to au upper part inside the casing 31, and a discharge unit 35 configured to discharge condensed water stored in the storage part 33.

A space is formed inside the casing 31. The casing 31 has a circular-cylindrical larger diameter part 31a and a circular-cylindrical smaller diameter part 31b connected to the top of the larger diameter part 31a. The larger diameter part 31a is larger in diameter than the smaller diameter part 31b. The larger diameter part 31a is connected to the downstream end of the hydrogen-containing gas pipe L4 and the branched nitrogen pipe L5.

An emission opening 31c opened to the atmosphere is formed at the top end of the smaller diameter part 31b. A hydrogen-containing gas introduced into the casing 31 is emitted to the atmosphere through the emission opening 31c.

The spray unit 32 is provided at an upper part of the larger diameter part 31a inside the larger diameter part 31a. For example, the spray unit 32 has a horizontally extending spray pipe and a plurality of nozzles provided to the bottom face of the spray pipe. The plurality of nozzles are aligned at equal intervals along the extending direction of the spray pipe. The spray pipe is connected to the downstream end of the branched makeup water pipe L6. The spray pipe is supplied with makeup water via the branched makeup water pipe L6 as cooling water used for cooling the hydrogen-containing gas. The spray unit 32 sprays the cooling water (cooling fluid), which is supplied to the spray pipe, downward from the plurality of nozzles. Specifically, the spray unit 32 sprays cooling water to the hydrogen-containing gas supplied inside the casing 31. Accordingly, the hydrogen-containing gas is cooled. Note that an unevaporated part of the sprayed cooling water drops on the bottom of the casing 31.

The storage part 33 is provided to the bottom of the casing 31. An unevaporated part of the sprayed cooling water is stored in the storage part 33.

The seal part 34 suppresses inflow (backflow) of the atmosphere from the emission opening 31c by using a gas supplied into the emission stack 30.

The seal part 34 uses, as a seal gas, a hydrogen-containing gas introduced into the emission stack 30 via the hydrogen-containing gas pipe L4. That is, the hydrogen-containing gas introduced into the emission stack 30 raises inside the emission stack 30. Accordingly, the hydrogen-containing gas pushes back the atmosphere (in particular, oxygen) that would otherwise flow into the emission stack 30 from the emission opening 31c. In such a way, the hydrogen-containing gas is used as a seal gas.

Further, for example, a so-called velocity seal may be provided as the seal part 34. The seal part 34 has a reduced diameter part 34a provided inside the smaller diameter part 31b. The reduced diameter part 34a is a truncated conical member having openings formed at the top end and the bottom end. The entire circumferential region at the bottom end of the reduced diameter part 34a is in contact with the inner circumferential face of the smaller diameter part 31b. The side wall of the reduced diameter part 34a is sloped so as to have a smaller diameter for an upper part thereof. The hydrogen-containing gas introduced into the emission stack 30 raises inside the emission stack 30 and passes through the reduced diameter part 34a from below to above.

As discussed above, the gas supplied into the emission stack 30 from the SOEC 10 is used to prevent oxygen from flowing into the emission stack 30 from the atmosphere through the emission opening 31c.

Note that the electric boiler 17 generates steam both before start of electrolysis, such as during startup, and during electrolysis (during normal operation). Thus, steam can be used as the seal gas of the stack before start of electrolysis in SOEC 10.

Note that nitrogen supplied via the branched nitrogen pipe L5 may be used as the seal gas when the steam or hydrogen is unable to be supplied into the emission stack 30 or is insufficient, such as during emergency stop of the SOEC 10 and the electric boiler 17.

Further, when the flow rate of the seal gas discharged from the SOEC 10 is insufficient, a part of steam supplied from the electric boiler 17 to the SOEC 10 may be supplied to the stack via the branched steam pipe L7.

Further, an oxygen content meter may be installed inside the emission stack 30 to measure the oxygen concentration inside the emission stack 30 and monitor whether or not oxygen flows into the emission stack 30 from the atmosphere.

The discharge unit 35 discharges water stored in the storage part 33 to a drain pit 41 provided outside the system. The discharge unit 35 has a U-shaped pipe 35a formed in a U-shape. One end of the U-shaped pipe 35a is connected to the casing 31 (storage part 33) via a horizontal pipe. Further, the other end of the U-shaped pipe 35a is connected to the drain pit 41 via the horizontal pipe.

Further, a liquid (source water) is filled inside the U-shaped pipe 35a. This prevents the atmosphere from flowing into the emission stack 30 via the U-shaped pipe 35a or prevents hydrogen inside the emission stack 30 from flowing out via the discharge unit 35.

Further, since the source water may evaporate inside the U-shaped pipe 35a, the U-shaped pipe 35a is always supplied with the source water at a constant flow rate from a source water supply unit 40. This suppresses a reduction in the seal capability that would otherwise be caused by an excessive reduction of the source water filled in the U-shaped pipe 35a. Note that a level meter configured to determine a liquid level of the internal source water may be provided to the U-shaped pipe 35a to monitor the liquid level.

Further, as illustrated in Fig. 2, the hydrogen production plant 1 includes a thermometer (temperature detection unit) 51 configured to measure the temperature of the hydrogen-containing gas after cooled by the spray unit 32 and a level meter (level detection unit) 52 configured to determine the liquid level of water stored in the storage part 33.

Further, as illustrated in Fig. 2, the hydrogen production plant 1 includes a control unit 50. The control unit 50 controls the opening of each valve provided to the hydrogen production plant 1. Further, the control unit 50 acquires information from the thermometer 51 and the level meter 52.

The control unit (controller) 50 includes, for example, a central processing unit (CPU: processor), a main storage device (main memory), a secondary storage device (secondary storage: memory), and the like. Furthermore, the control unit 50 may include a communication unit for transmitting and receiving information to and from other devices.

The main storage device is formed of a writable memory such as a cache memory, a random access memory (RAM), or the like, for example, and is used as a working area where loading of an execution program for the CPU, writing of processing data by the execution program, or the like are performed.

The secondary storage device is a non-transitory computer readable storage medium. The secondary storage device may be, for example, a magnetic disk, a magneto-optical disk, a CD-ROM, a DVD-ROM, a semiconductor memory, or the like.

A series of processes for implementing various functions are stored in the secondary storage device in a form of a program as an example, and various functions are implemented when the CPU loads the program into the main storage device and performs modification and calculation processes on information. Note that, for the program, a form of being installed in advance in the secondary storage device, a form of being provided in a state of being stored in a computer readable storage medium, a form of being delivered via a wired or wireless communication connection, or the like may be applied. The computer readable storage medium may be a magnetic disk, a magneto-optical disk, a CD-ROM, a DVD-ROM, a semiconductor memory, or the like.

The control unit 50 controls the opening of the cooling water valve B6 based on the temperature of the hydrogen-containing gas determined by the thermometer 51. That is, the control unit 50 regulates the flow rate of the cooling water supplied from the spray unit 32 based on the temperature of the hydrogen-containing gas determined by the thermometer 51.

Specifically, the control unit 50 may increase the opening of the cooling water valve B6 so as to increase the flow rate of the cooling water when the temperature of the hydrogen-containing gas determined by the thermometer 51 is higher than or equal to a predetermined temperature (for example, about 400 °C) or may reduce the opening of the cooling water valve B6 so as to reduce the flow rate of the cooling water when the temperature of the hydrogen-containing gas determined by the thermometer 51 is lower than the predetermined temperature.

Further, the control unit 50 may control the opening of the cooling water valve B6 based on the liquid level determined by the level meter 52. That is, the control unit 50 may regulate the flow rate of the cooling water supplied from the spray unit 32 based on the liquid level determined by the level meter 52.

Specifically, the control unit 50 may control the cooling water valve B6 so as to increase the flow rate of the cooling water when the liquid level determined by the level meter 52 is lower than a predetermined level or may control the cooling water valve B6 so as to reduce the flow rate of the cooling water when the liquid level determined by the level meter 52 is higher than the predetermined level.

Note that the method for regulating the flow rate of the cooling water performed by the control unit 50 includes a method for regulating the flow rate of the cooling water supplied from the spray unit 32 by using a control valve (not illustrated) or a method for performing switching between water flow to the spray unit 32 being on (ON) and water flow to the spray unit 32 being off (OFF) by opening and closing operation of the cooling water valve B6.

Next, the behavior of the hydrogen production plant 1 during normal operation, during startup, and during emergency stop will be described.

### [During normal operation]

During normal operation, the hydrogen production plant 1 generates hydrogen, which is the product gas, by the hydrogen generation unit 20. That is, the hydrogen production plant 1 supplies a hydrogen-containing gas generated by the SOEC 10 to the hydrogen generation unit 20 via the branched hydrogen-containing gas pipe L8. At this time, the control unit 50 controls the first hydrogen-containing gas valve B2 to be fully closed and controls the second hydrogen-containing gas valve B5 to be fully opened. Further, the control unit 50 controls the first steam valve B1 to be fully opened and controls the nitrogen valve B3 and the second steam valve B4 to be fully closed.

### [During startup or during emergency stop]

During startup or during emergency stop, the hydrogen production plant 1 emits the hydrogen-containing gas to the atmosphere. That is, the hydrogen production plant 1 supplies the hydrogen-containing gas generated by the SOEC 10 to the emission stack 30 via the hydrogen-containing gas pipe L4. At this time, the control unit 50 controls the first hydrogen-containing gas valve B2 to be fully opened and controls the second hydrogen-containing gas valve B5 to be fully closed. Further, the control unit 50 controls the second steam valve B4 to be opened.

Note that, when no cooling water is supplied to the spray unit 32 of the emission stack 30 due to some accident occurring in the hydrogen production plant 1 or when no or insufficient steam for sealing is supplied to the emission stack 30, the control unit 50 may control the nitrogen valve B3 to be fully opened. By supplying a nitrogen gas to the emission stack 30 with the nitrogen valve B3 being fully opened, the cooling water or the steam for sealing may be substituted with this nitrogen gas.

As the operation during startup, steam is introduced after the temperature of the electrolytic chamber of the SOEC 10 is above a certain value, an electrolysis voltage is applied, thereby electrolysis is started, and hydrogen is generated. Then, once the operation of the device becomes stable, switching is performed so that a hydrogen-containing gas is guided to the product gas system (hydrogen generation unit 20).

Further, the case during emergency stop may be, for example, a case where the SOEC 10 has been interlocked and stopped, a case where a facility to be supplied with the product gas has failed, or the like. In such a case, switching is performed so that the hydrogen-containing gas is guided to the emission stack 30.

According to the present embodiment, the following effects and advantages are achieved.

In the present embodiment, the emission stack 30 has the spray unit 32 configured to supply a cooling fluid for cooling the hydrogen-containing gas to the hydrogen-containing gas introduced into the emission stack 30. This makes it possible to cool the hydrogen-containing gas supplied inside the emission stack 30. It is therefore possible to inhibit an instance where the hydrogen-containing gas spontaneously ignites when emitted to the atmosphere. This can improve the safety of the hydrogen production plant 1.

In the present embodiment, the emission stack 30 has a seal part 34 configured to suppress inflow of the atmosphere from the emission opening 31c. This makes it possible for the seal part 34 to inhibit an instance where the atmosphere passes through the emission opening 31c and flows into the emission stack 30. It is therefore possible to avoid combustion of the hydrogen-containing gas inside the emission stack 30. This can improve the safety of the hydrogen production plant 1.

Further, in the present embodiment, steam generated by the electric boiler 17 is used to suppress inflow of the atmosphere. Accordingly, the number of components can be reduced compared to a case where a separate device for supplying a gas for suppressing inflow of the atmosphere to the emission stack 30 is provided. Therefore, the costs can be reduced. Further, this enables space saving.

Further, the present embodiment includes the control unit 50 configured to control the cooling water valve B6 based on a temperature of the hydrogen-containing gas determined by the thermometer 51. Accordingly, the flow rate of the cooling water can be regulated based on the temperature of the hydrogen-containing gas after cooled by the spray unit 32. Therefore, when the control unit 50 controls the cooling water valve B6 so that the temperature of the hydrogen-containing gas is in a predetermined temperature range, the temperature of the hydrogen-containing gas can be maintained in the predetermined temperature range. It is thus possible to more suitably inhibit an instance where the hydrogen-containing gas spontaneously ignites when emitted to the atmosphere. This can improve the safety of the hydrogen production plant 1.

Further, the present embodiment includes the control unit 50 configured to control the cooling water valve B6 based on a liquid level determined by the level meter 52. This makes it possible to regulate the flow rate of the cooling water based on the liquid level of water stored in the storage part 33. Since the liquid level changes in accordance with the amount of stored water, the amount of the stored water can be estimated by determination of the liquid level.

Further, the present embodiment includes the branched nitrogen pipe L5 configured to guide a nitrogen gas, which is from the nitrogen gas supply unit 14, to the emission stack 30. This makes it possible to supply a nitrogen gas to the emission stack 30. Therefore, for example, when the spray unit 32 is stopped in an emergency and is thus unable to supply cooling water to the hydrogen-containing gas, it is possible to cool the hydrogen-containing gas with a nitrogen gas by supplying the nitrogen gas to the emission stack 30. Thus, since the hydrogen-containing gas can be cooled even when the spray unit 32 is stopped in an emergency, it is possible to inhibit an instance where the hydrogen-containing gas spontaneously ignites when emitted to the atmosphere. This can improve the safety of the hydrogen production plant 1.

Further, in the present embodiment, nitrogen is supplied to the emission stack 30 by the nitrogen gas supply unit 14 configured to supply nitrogen to the SOEC 10. That is, nitrogen is supplied from a single device (the nitrogen gas supply unit 14) to both the SOEC 10 and the emission stack 30. Accordingly, the number of components can be reduced compared to a case where a separate device for supplying nitrogen to the emission stack 30 is provided. Therefore, the costs can be reduced. Further, this enables space saving.

Further, in the present embodiment, the discharge unit 35 has the U-shaped pipe 35a having a U-shape and filled with a liquid. Accordingly, sealing is established between the inside and the outside of the emission stack 30 by the liquid filled inside the discharge unit 35. It is therefore possible to inhibit an instance where the atmosphere flows into the emission stack 30 via the discharge unit 35. It is thus possible to avoid combustion of the hydrogen-containing gas inside the emission stack 30. Further, it is possible to avoid an instance where the hydrogen-containing gas inside the emission stack 30 leaks to the atmosphere and combusts. This can improve the safety of the hydrogen production plant 1.

Note that the present disclosure is not limited to the embodiment described above and can be modified as appropriate within the scope not departing from the spirit thereof.

For example, although an example in which a velocity seal is provided to the emission stack 30 as the seal part 34 has been described in the above embodiment, the present disclosure is not limited thereto. For example, a molecular seal may be provided to the emission stack 30 as the seal part 34. Further, when sufficient sealing can be ensured with a gas supplied into the emission stack 30, it is not necessarily required to provide a seal mechanism such as the reduced diameter part 34a (velocity seal).

Further, although an example in which the SOEC 10 is applied as a device that produces a hydrogen-containing gas has been described in the above embodiment, the present disclosure is not limited thereto. The device that produces a hydrogen-containing gas can be any devices that electrolyze water at a high temperature.

The hydrogen production plant and the hydrogen production method according to the embodiment described above are understood as follows, for example.

The hydrogen production plant according to the first aspect of the present disclosure includes: a production unit (10) configured to produce a hydrogen-containing gas; and an emission unit (30) configured to, once the hydrogen-containing gas produced by the production unit (10) is introduced into the emission unit, emit the introduced hydrogen-containing gas to the atmosphere, and the emission unit (30) has a cooling fluid supply unit (32) configured to supply a cooling fluid for cooling the hydrogen-containing gas to the hydrogen-containing gas introduced into the emission unit.

In the above configuration, the emission unit has the cooling fluid supply unit configured to supply a cooling fluid for cooling the hydrogen-containing gas to the hydrogen-containing gas introduced into the emission unit. This makes it possible to cool the hydrogen-containing gas supplied inside the emission unit. It is therefore possible to inhibit an instance where the hydrogen-containing gas spontaneously ignites when emitted to the atmosphere. This can improve the safety of the hydrogen production plant.

Further, the hydrogen production plant according to the second aspect of the present disclosure includes: in the first aspect described above, a steam generation unit (17) configured to generate steam to be supplied to the production unit (10); a first steam pipe (L3) configured to guide steam generated by the steam generation unit (17) to the production unit (10); and a second steam pipe (L7) configured to guide steam generated by the steam generation unit (17) to the emission unit (30), and the emission unit (30) has an emission opening (31c) opened to the atmosphere and a seal part configured to use the steam supplied via the second steam pipe (L7) to suppress inflow of the atmosphere from the emission opening (31c).

In the above configuration, the emission unit has a seal part configured to suppress inflow of the atmosphere, in particular, oxygen from the emission opening. This makes it possible for the seal part to inhibit an instance where the atmosphere, in particular, oxygen passes through the emission opening and flows into the emission unit. It is therefore possible to avoid combustion of the hydrogen-containing gas inside the emission unit. This can improve the safety of the hydrogen production plant.

Further, in the above configuration, steam generated by the steam generation unit is used to suppress inflow of the atmosphere, in particular, oxygen. Accordingly, the number of components can be reduced compared to a case where a separate device for supplying a gas for suppressing inflow of the atmosphere, in particular, oxygen to the emission unit is provided. Therefore, the costs can be reduced. Further, this enables space saving.

Further, in the hydrogen production plant according to the third aspect of the present disclosure, in the first aspect or the second aspect described above, the emission unit (30) has a cooling fluid regulation unit (B6) configured to regulate a flow rate of the cooling fluid supplied from the cooling fluid supply unit (32) and a temperature detection unit (51) configured to determine a temperature of the hydrogen-containing gas after cooled by the cooling fluid, and the hydrogen production plant includes a control unit (50) configured to control the cooling fluid regulation unit (B6) based on the temperature of the hydrogen-containing gas determined by the temperature detection unit (51).

The above configuration includes the control unit configured to control the cooling fluid regulation unit based on a temperature of the hydrogen-containing gas determined by the temperature detection unit. Accordingly, the flow rate of the cooling fluid can be regulated based on the temperature of the hydrogen-containing gas after cooled by the cooling fluid supply unit. Therefore, when the control unit controls the cooling fluid regulation unit so that the temperature of the hydrogen-containing gas is in a predetermined temperature range, the temperature of the hydrogen-containing gas can be maintained in the predetermined temperature range. It is thus possible to more suitably inhibit an instance where the hydrogen-containing gas spontaneously ignites when emitted to the atmosphere. This can improve the safety of the hydrogen production plant.

Note that the control unit may control the cooling fluid regulation unit so as to increase the flow rate of the cooling fluid when the temperature of the hydrogen-containing gas determined by the temperature detection unit is higher than a predetermined temperature range or may control the cooling fluid regulation unit so as to reduce the flow rate of the cooling fluid when the temperature of the hydrogen-containing gas determined by the temperature detection unit is lower than the predetermined temperature range.

Note that the method for regulating the flow rate of the cooling fluid performed by the control unit includes a method for regulating the flow rate of the cooling fluid supplied from the cooling fluid supply unit or a method for performing switching between ON and OFF of the cooling fluid supply unit.

Further, in the hydrogen production plant according to the fourth aspect of the present disclosure, in the first aspect or the second aspect described above, the emission unit (30) has a cooling fluid regulation unit (B6) configured to regulate a flow rate of the cooling fluid supplied from the cooling fluid supply unit (32), a storage part (33) configured to store condensed water generated by condensation of the hydrogen-containing gas, and a level detection unit (52) configured to determine a liquid level of the condensed water stored in the storage part (33), and the hydrogen production plant includes a control unit (50) configured to control the cooling fluid regulation unit (B6) based on the liquid level determined by the level detection unit (52).

The above configuration includes the control unit configured to control the cooling fluid regulation unit based on a liquid level determined by the level detection unit. This makes it possible to regulate the flow rate of the cooling water based on the liquid level of water stored in the storage part. Since the liquid level changes in accordance with the amount of stored water, the amount of the stored water can be estimated by determination of the liquid level.

Note that the control unit may control the cooling fluid regulation unit so as to increase the flow rate of the cooling fluid when the liquid level determined by the level detection unit is lower than a predetermined level or may control the cooling fluid regulation unit so as to reduce the flow rate of the cooling fluid when the liquid level determined by the level detection unit is higher than the predetermined level.

Further, the hydrogen production plant according to the fifth aspect of the present disclosure includes: in any of the first aspect to the fourth aspect described above, a first nitrogen pipe (L1) configured to guide, to the production unit (10), a nitrogen gas from a nitrogen supply unit (14); and a second nitrogen pipe (L5) configured to guide, to the emission unit (30), a nitrogen gas from the nitrogen supply unit (14).

The above configuration includes the second nitrogen pipe configured to guide a nitrogen gas, which is from the nitrogen supply unit, to the emission unit. This makes it possible to supply a nitrogen gas to the emission unit. Therefore, for example, when the cooling fluid supply unit is stopped in an emergency and is thus unable to supply a cooling fluid to the hydrogen-containing gas, it is possible to cool the hydrogen-containing gas with a nitrogen gas by supplying the nitrogen gas to the emission unit. Thus, since the hydrogen-containing gas can be cooled even when the cooling fluid supply unit is stopped in an emergency, it is possible to inhibit an instance where the hydrogen-containing gas spontaneously ignites when emitted to the atmosphere. This can improve the safety of the hydrogen production plant.

Further, in the above configuration, nitrogen is supplied to the emission unit by the nitrogen supply unit configured to supply nitrogen to the production unit. That is, nitrogen is supplied from a single device (the nitrogen supply unit) to both the production unit and the emission unit. Accordingly, the number of components can be reduced compared to a case where a separate device for supplying nitrogen to the emission unit is provided. Therefore, the costs can be reduced. Further, this enables space saving.

Further, in the hydrogen production plant according to the sixth aspect of the present disclosure, in any of the first aspect to the fifth aspect described above, the emission unit (30) has a storage part (33) configured to store condensed water generated by condensation of a part of the hydrogen-containing gas and a discharge unit (35) configured to discharge the condensed water stored in the storage part (33) to outside a system, and the discharge unit (35) has a U-shaped pipe (35a) having a U-shape and filled with a liquid.

In the above configuration, the discharge unit has the U-shaped pipe having a U-shape and filled with a liquid. Accordingly, sealing is established between the inside and the outside of the emission unit by the liquid filled inside the discharge unit. It is therefore possible to inhibit an instance where the atmosphere, in particular, oxygen flows into the emission unit via the discharge unit. It is thus possible to avoid combustion of the hydrogen-containing gas inside the emission unit. Further, it is possible to avoid an instance where the hydrogen-containing gas inside the emission unit leaks to the atmosphere and combusts. This can improve the safety of the hydrogen production plant.

Further, the hydrogen production method according to the first aspect of the present disclosure includes: a production step of producing a hydrogen-containing gas; an introduction step of introducing a hydrogen-containing gas produced in the production step into an emission unit (30); a supply step of supplying a cooling fluid to the hydrogen-containing gas introduced into the emission unit (30); and an emission step of emitting the hydrogen-containing gas introduced into the emission unit (30) to the atmosphere.

### [Reference Signs List]

- 1:: hydrogen production plant
- 10:: SOEC (production unit)
- 11:: instrumentation air supply unit
- 12:: city gas supply unit
- 13:: hydrogen gas supply unit
- 14:: nitrogen gas supply unit (nitrogen supply unit)
- 15:: makeup water supply unit
- 16:: electrolytic air supply unit
- 17:: electric boiler (steam generation unit)
- 18:: heat exchanger
- 20:: hydrogen generation unit
- 21:: cooler
- 22:: dehumidifier
- 23:: compressor
- 30:: emission stack (emission unit)
- 31:: casing
- 31a:: larger diameter part
- 31b:: smaller diameter part
- 31c:: emission opening
- 32:: spray unit (cooling fluid supply unit)
- 33:: storage part
- 34:: seal part
- 34a:: reduced diameter part
- 35:: discharge unit
- 35a:: U-shaped pipe
- 40:: source water supply unit
- 41:: drain pit
- 50:: control unit
- 51:: thermometer
- 52:: level meter
- B1:: first steam valve
- B2:: first hydrogen-containing gas valve
- B3:: nitrogen valve
- B4:: second steam valve
- B5:: second hydrogen-containing gas valve
- B6:: cooling water valve
- L1:: nitrogen pipe (first nitrogen pipe)
- L2:: makeup water pipe
- L3:: steam pipe (first steam pipe)
- L4:: hydrogen-containing gas pipe
- L5:: branched nitrogen pipe (second nitrogen pipe)
- L6:: branched makeup water pipe
- L7:: branched steam pipe (second steam pipe)
- L8:: branched hydrogen-containing gas pipe

## Claims

1. A hydrogen production plant comprising:
a production unit configured to produce a hydrogen-containing gas; and
an emission unit configured to, once a hydrogen-containing gas produced by the production unit is introduced into the emission unit, emit the introduced hydrogen-containing gas to the atmosphere,
wherein the emission unit has a cooling fluid supply unit configured to supply a cooling fluid for cooling the hydrogen-containing gas to the hydrogen-containing gas introduced into the emission unit.

2. The hydrogen production plant according to claim 1 further comprising:
a steam generation unit configured to generate steam to be supplied to the production unit;
a first steam pipe configured to guide steam generated by the steam generation unit to the production unit; and
a second steam pipe configured to guide steam generated by the steam generation unit to the emission unit,
wherein the emission unit has an emission opening opened to the atmosphere and a seal part configured to use the steam supplied via the second steam pipe to suppress inflow of the atmosphere from the emission opening.

3. The hydrogen production plant according to claim 1, wherein the emission unit has a cooling fluid regulation unit configured to regulate a flow rate of the cooling fluid supplied from the cooling fluid supply unit and a temperature detection unit configured to determine a temperature of the hydrogen-containing gas after cooled by the cooling fluid,
the hydrogen production plant comprising:
a control unit configured to control the cooling fluid regulation unit based on the temperature of the hydrogen-containing gas determined by the temperature detection unit.

4. The hydrogen production plant according to claim 1, wherein the emission unit has a cooling fluid regulation unit configured to regulate a flow rate of the cooling fluid supplied from the cooling fluid supply unit, a storage part configured to store condensed water generated by condensation of the hydrogen-containing gas, and a level detection unit configured to determine a liquid level of the condensed water stored in the storage part,
the hydrogen production plant comprising:
a control unit configured to control the cooling fluid regulation unit based on a liquid level determined by the level detection unit.

5. The hydrogen production plant according to claim 1 further comprising:
a first nitrogen pipe configured to guide, to the production unit, a nitrogen gas from a nitrogen supply unit; and
a second nitrogen pipe configured to guide, to the emission unit, a nitrogen gas from the nitrogen supply unit.

6. The hydrogen production plant according to claim 1,
wherein the emission unit has a storage part configured to store condensed water generated by condensation of a part of the hydrogen-containing gas and a discharge unit configured to discharge the condensed water stored in the storage part to outside a system, and
wherein the discharge unit has a U-shaped pipe having a U-shape and filled with a liquid.

7. A hydrogen production method comprising:
a production step of producing a hydrogen-containing gas;
an introduction step of introducing a hydrogen-containing gas produced in the production step into an emission unit;
a supply step of supplying a cooling fluid to the hydrogen-containing gas introduced into the emission unit; and
an emission step of emitting the hydrogen-containing gas introduced into the emission unit to the atmosphere.
